# EUROPEAN PATENT SPECIFICATION

(11) **EP 0 826 611 B1**
(45) Date of publication and mention of the grant of the patent: **02.05.2001**
(21) Application number: 96112284.3
(22) Date of filing: 30.07.1996
(51) Int. Cl.: B65G 1/04

(54) **Storing system and method**
Verfahren und Vorrichtung zum Lagern
Procédé et dispositif d'emmagasinage

(43) Date of publication of application: 04.03.1998
(73) Proprietor: ASSA INDUSTRIES (C.S.) LTD, Ramat Gan (IL)
(72) Inventor: Broshi, Yuval, Ramat Gan (IL)
(74) Representative: Modiano, Guido, Dr.-Ing.

(56) References cited:
- EP-A- 0 563 824
- US-A- 3 273 727
- US-A- 3 653 485

## Description

### FIELD OF THE INVENTION

The present invention concerns a system for automated storing, retrieval and transporting of goods of every shape and size and configuration in aisleless warehouses, ships, airplanes, trains, trucks or other means for storing and transporting of goods. The system also provides for erecting of aisleless warehouses, aisleless parking buildings, aisleless parking lots and aisleless storage areas for maximum use of available space.

The invention relates particularly, but not exclusively, to automated storage, retrieval and transportation of goods stacked on pallets and to all kinds of containers.

The invention further relates to the automatic storage and retrieval of cars in parking buildings or parking lots. The invention enables a computerized fully automated handling of stored items, within an aisleless warehouse, from the warehouse to the transporting vehicle, from one transporting vehicle to another and transporting means from the vehicle to a warehouse. It will also enable automated loading and evacuating of containers and automated loading and unloading of the containers to the transporting vehicle or a storage area. The new means can be mounted on a fixed basis or on mobile ones such as ships, airplanes, trains trucks and containers. It can be mounted as single level or as multilevel structures in any conceivable arrangement of rectangular units.

A system for automated storing, retrieval and transporting of goods according to the precharacterizing portion of claim 1 is known from EP-A-563 824.

### SUMMARY OF INVENTION

According to the invention there is provided a system for the storing, retrieving and transporting of goods as set forth in claim 1.

### EMBODIMENTS OF THE INVENTION

Vehicles, cargo or any other goods would be divided into units and placed on pallets as described above. Each of the above units would be individually connected to an onboard controlling computer.

A standard computer interface will be provided to link the computer and warehouse computer.

All pallets would fit the measurements of said rectangular units enabling free motion from one unit to the other in either the longitudinal or lateral directions. The stored goods will be placed on the carrying plate in a designated area outside the storage area. The loaded pallet will then be lifted on an air cushion and set to motion by the means provided, controlled by the controlling computer. Each of the individual units which the pallet is about to pass will be activated before the pallet enters, to ensure smooth motion of the pallet. Each of the units already passed by the pallet will be immediately deactivated. The controlling computer will place the above pallet at random or according to software defined criteria within the storage area. To enable the movement of a pallet in a storage area which contains many other pallets, the computer will dynamically evacuate all necessary plates sideward as to aisle through which the desired pallet will move from one point to the other. For loading to or unloading from a vehicle or container, it is placed adjacent to the storage area with its floor level at the same level as the storage area's floor level as to form a single surface. The vehicles, onboard computer is connected to the storage area's computer to enable the movement of pallets to and from the vehicle or container.

In order to erect a multilevel storing warehouse an elevator must be added. the elevator will contain one or more such rectangular units, which are identical in size to those of the entire warehouse. Each of the said rectangular units will contain air pressure on/off control valve and lateral and longitudinal motion inducers.

Each of the above units and the elevator's control will be connected to the main controlling computer. The elevator will be mounted adjacent to the warehouse, so at each level it stops, a smooth continuous surface will be formed to allow the pallet's frictionless movement to and from the elevator. The controlling computer with suitable software will handle all movements of the pallets and record at every single moment the whereabouts of each item in the storage area. It will manipulate the pallets to enable storage and retrieval of goods and calculate the path of movement for each pallet simultaneously to ensure smooth movement to and from the storage area exit.

### SHORT DESCRIPTION OF THE DRAWINGS

The invention and system will now be described with reference to the drawings in which:
Fig. 1 is a perspective schematic illustration of a multilevel storage facility.
Fig. 2 is a storing pallet and an article placed thereon.
Fig. 3 is an enlarged perspective illustration of a storing unit.
Fig. 4 is a top view of a carrying pallet.
Fig. 5 is a top view of a floor unit.
Fig. 6 is a side sectional illustration of a Fig. 5 and the propelling means.
Fig. 7 is a sectional illustration of the propelling means.
Figs. 8 and 9 demonstrates two modes of the propelling means.

### DETAILED DESCRIPTION OF THE INVENTION

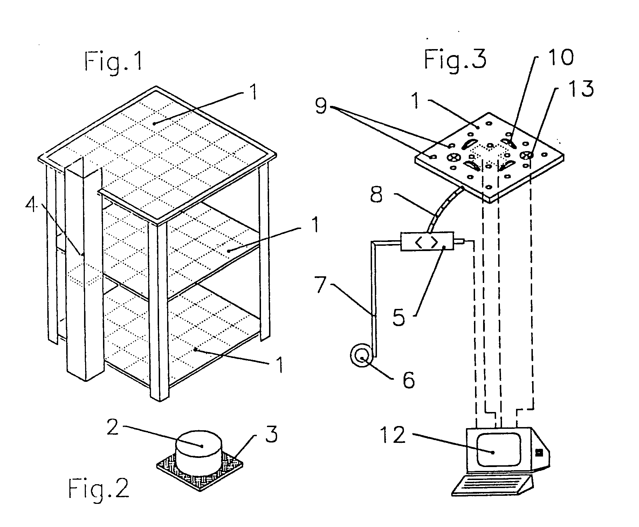

Turning first to Fig. 1 illustrating schematically a storing facility having three storing plans, each of which is divided into a large number of rectangular-units 1. The goods to be stored 2 are placed on a carrying plate or pallet 3 (Fig. 2), which in turn is placed, if so required, in an elevator 4 which elevates same to the desired storage plan level.

When elevator 4 stops, it forms a continuous surface with the storage plan, which comprises as stated above, a large number of rectangular units 1.

A pressured air valve 5 (Fig. 3), is turned on to provide compressed air underneath the carrying pallet 3. Simultaneously pressured air is directed underneath the adjacent rectangular unit, to form frictionless movement surface. The pressured air is obtained from pump 6, and delivered by means of conduits 7 and 8 underneath unit 1 and released via a plurality of apertures 9. Pallet 3 is moved by means of different means 10 as will be described. Unit 1 is further provided with sensors 13. Said sensors of both the elevator's rectangular unit and the storage area's rectangular unit 1 sense that the carrying pallet 3 entirely moved to the adjacent storage area's first rectangular unit, the elevator's air pressure valve is turned off and simultaneously the air pressure valve of the next adjacent rectangular unit in the desired direction of movement is turned on, enabling the continuous movement of the carrying pallet 3. The movement can be induced by means 10 which would enable movement of the carrying pallet to any of the four possible directions. When the carrying pallet with its load finally reaches its designated storage place the local air pressure valve is turned off to stop the air film effect under the carrying plate so it can rest on the storage plan.

All the above functions are controlled by a computer 12 which is connected to every single-item in the system. The computer manipulates the movement of all the carrying pallets in the storage area to clear the path for ingoing or outgoing carrying pallets with the goods placed thereon.

In the same manner any goods could be delivered and transported from the warehouse to another by using trucks equipped with the same facilities. Likewise goods could be transferred to ships, air cargo aircraft and the like.

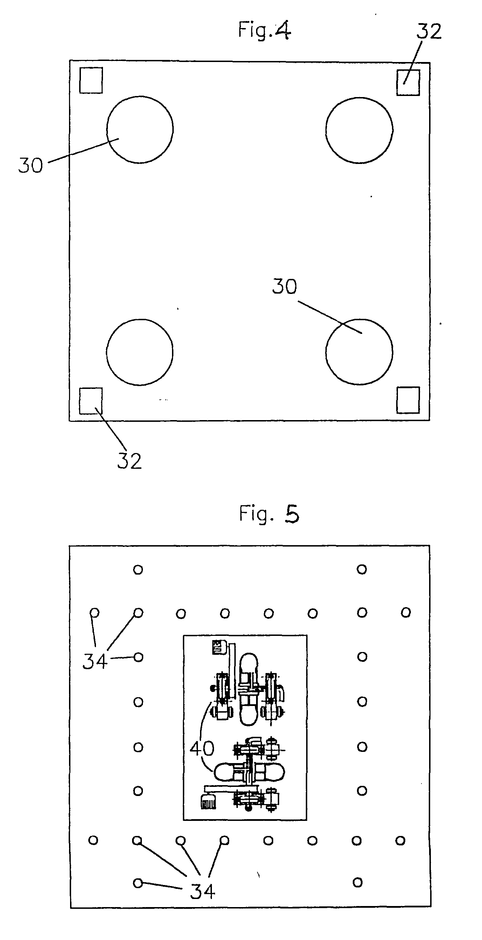

Fig. 4 is a top view of carrying pallet 3 which is provided with four air cushions 30 and four short leg-like members 32 which enable pallet 3 to rest thereon when not in motion.

Fig. 5 is a top view of a section of the floor (unit 1) on which pallet 3 travels and which comprises a plurality of apertures or air outlets 34 being precisely in a planned route of air cushions 30 in the lateral or longitudinal direction. The distance between opening 34 is smaller than the diameter of air cushion 30 such that it will enable that air cushions 30 would cover two apertures 34 simultaneously (thus it will receive pressurized air from one outlet until it meets the adjacent one). There are further being provided propelling means 40 adapted to move pallet 3 to either longitudinal or lateral direction.

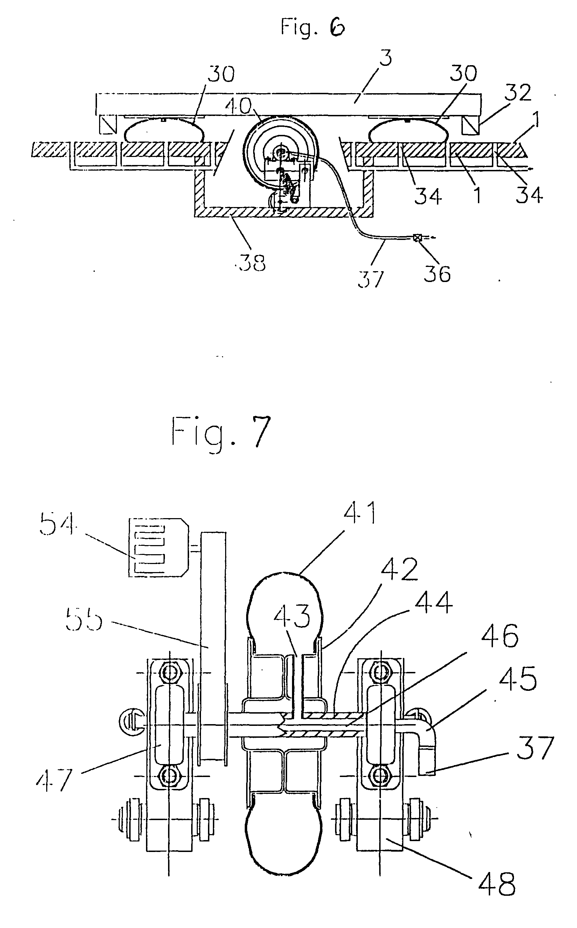

Fig. 6 is a sectional side illustration of the floor and the propelling means 40 provided.

Carrying pallet 3 comprises elastic air cushions 30 and short leg members 32. The carrying pallet hovers over floor 1 being part of a warehouse floor. In the floor there are provided air outlets 34 which receive pressurized air from valve 5 (Fig. 3) controlled by computer 12.

There are further provided two propelling means 40, one for the lateral direction and the second for longitudinal direction being rigidly connected to frame 38. The wheels being connected to a source of pressurized air via three way valve 36 via conduit 37.

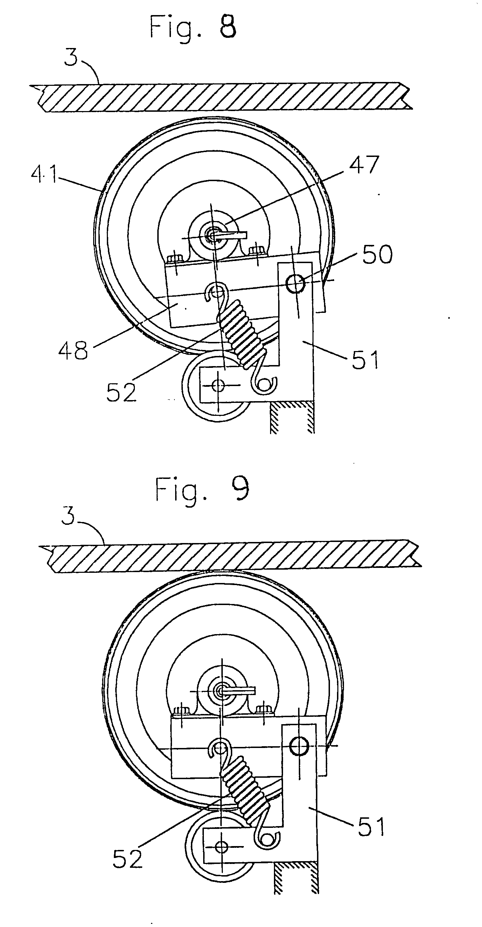

Fig. 7 is a top sectional illustration of propelling means 40. Said means comprises a tyre 41 placed over wheel 42 which is connected to axle 44. Air passage 43 connects tyre 41 and bore 46 provided in axle 44. To said bore 46 there is connected a pivoting air connector 45 through which pressurized air is being supplied to inflate tyre 41 at will. The axle is supported by bearings 47 which are connected to swinging arms 48. As can be seen in Figs. 8 and 9 these arms 48 fulcrumed over pin 50 which enables them to swing up and down. Pin 50 is supported by the base structure 51 being rigidly connected to the base of the floor frame 38. A spring 52 is mounted intermediate swinging arm 48 and support 51. When tyre 41 is inflated via conduit 37 contact will be established between the tyre 41 and pallet 3 (Fig. 9). When air valve 36 is open air from tyre 41 will escape thus the tyre will be pulled downwardly by spring 52 and disconnected form pallet 3. The said spring would also resist the force created by motor 54 and belt 55 on axle 44.

As seen in Fig. 9 the propelling system is in contact with pallet 3 when tyre 41 is inflated. When motor 54 is activated its revolving is transferred by belt 55 to wheel 42, and by tyre 41 to pallet 3.

The engagement of tyre 41 and pallet 3 is being disconnected when the air is released through valve 37 and the spring pulls the wheel downwardly against the bottom of frame 38.

### MANNER OF OPERATION

Pressurized air being supplied via conduits 7 and 8 and released via aperture 34 in floor part 1 into the air cushions 30 which causes the air cushion to be inflated. The blown up air cushions would elevate carrying pallet 3 and cause that legs 32 will not engage the floor. Pressurized air is fed to tyre 41 of propelling means 40, the tyre will be inflated and establish connection with the carrying pallet 3. The motor is being turned on which would rotate the wheel and the pallet will move in the required direction. At the end of the motion the motor being switched off the air is released from the tyre which will enable the spring to pull the tyre downwardly the air supply is cut off and the plate would rest on its legs at that point.

Where technical features mentioned in any claim are followed by reference signs, those reference signs have been included for the sole purpose of increasing the intelligibility of the claims and accordingly, such reference signs do not have any uniting effect on the scope or each element identified by way of example by such reference signs.

## Claims

1. A system for the storing, retrieving and transporting of goods, the system including:
a plate or pallet (3) on which goods can be placed;
a storage area comprising a supporting floor which is divided into rectangular units (1), each unit (1) being provided with a plurality of outlets (34), a stream of computer controlled compressed air being directed through the outlets (34) towards an underneath side of the pallet (3); and
means (40) for causing either lateral or longitudinal motion of the pallet (3), such that the pallet (3) is conveyed to a given location in the storage area,
each unit (1) being individually connected to a main controlling computer (12), which controls the system as a whole,
characterized in that
the pallet (3) is provided at the underneath side thereof with a plurality of air cushions (30) and a plurality of short leg-like members (32), the stream of computer controlled compressed air being directed through the outlets (34) into the air cushions (30), the compressed air enabling frictionless movement of the pallet (3).

2. The system of claim 1, wherein each unit (1) is provided with an air pressure on/off control valve (5) which is connected to an air pump (6) both in turn being controlled by the computer (12).

3. The system of claim 1, wherein each unit (1) is provided with two propelling means (41, 42, 44) for lateral or longitudinal movement of the pallet (3) placed thereon, the propelling means (41, 42, 44) being connected to a source (6) of pressurized air, the propelling means (41, 42, 44) being adapted to be inflated to establish contact with the pallet (3).

## Patentansprüche

1. Ein System zur Lagerung, zum Zurückholen und Transport von Gütern, wobei das System folgendes umfaßt:
ein Platte oder Palette (3), auf der Güter anbringbar sind;
einen Lagerungsbereich, der einen Stützboden einschließt, der in rechteckigen Einheiten (1) eingeteilt ist, wobei jede Einheit (1) mit einer Vielzahl von Auslässen (34) ausgestattet ist, wobei ein Strom computergesteuerter Druckluft durch die Auslässe (34) zur unteren Seite der Palette (3) gerichtet wird; und
ein Mittel (40), um entweder die seitliche oder die Längsbewegung der Palette (3) zu bewirken, so daß die Palette (3) an eine gegebene Stelle des Lagerungsbereichs geführt wird,
wobei jede Einheit (1) einzeln an einen Hauptsteuerungscomputer (12) angeschlossen ist, der das System als ein Ganzes steuert, dadurch gekennzeichnet, daß
die Palette (3) an ihrer unteren Seite mit einer Vielzahl von Luftkissen (30) und einer Vielzahl von kurzen fußartigen Gliedern (32) ausgestattet ist, wobei der Strom der computergesteuerten Druckluft durch die Auslässe (34) in die Luftkissen (30) geleitet wird, wobei die Druckluft die reibungslose Bewegung der Palette (3) ermöglicht.

2. Das System nach Anspruch 1, wobei jede Einheit (1) mit einem Druckluft-Ein/Aus-Steuerventil (5) ausgestattet ist, das an einer Luftpumpe (6) angeschlossen ist, wobei beide ihrerseits durch den Computer (12) gesteuert werden.

3. Das System nach Anspruch 1, wobei jede Einheit (1) mit zwei Antriebsmitteln (41, 42, 44) für die seitliche oder die Längsbewegung der darauf gestellten Palette (3) ausgestattet ist, wobei die Antriebsmittel (41, 42, 44) an eine Quelle (6) von Druckluft angeschlossen sind, wobei die Antriebsmittel (41, 42, 44) ausgebildet sind, um aufgeblasen zu werden, um den Kontakt mit der Palette (3) zu erzeugen.

## Revendications

1. Un système pour stocker, récupérer et transporter des marchandises, le système comprenant :
- un plateau ou palette (3) sur lequel les marchandises peuvent être placées ;
- une zone de stockage comprenant un plancher de support qui est divisé en unités rectangulaires (1), chaque unité (1) étant munie d'une pluralité d'orifices (34), un courant d'air comprimé contrôlé par ordinateur étant dirigé à travers les orifices (34) vers une face inférieure de la palette (3) ; et
- des moyens (40) pour provoquer le déplacement latéral ou longitudinal de la palette (3), de telle façon que la palette (3) soit transportée vers un emplacement donné dans la zone de stockage,
- chaque unité (1) étant connectée individuellement à un ordinateur de contrôle principal (12), qui contrôle le système dans son ensemble,
caractérisé en ce que
- la palette (3) est munie, sur sa face inférieure, d'une pluralité de coussins d'air (30) et d'une pluralité d'organes (32) semblables à des jambes courtes, le courant d'air comprimé contrôlé par ordinateur étant dirigé à travers les orifices (34) dans les coussins d'air (30), l'air comprimé permettant le déplacement sans frottement de la palette (3).

2. Le système selon la revendication 1, dans lequel chaque unité (1) est munie d'une valve (5) de contrôle par alimentation/coupure de la pression d'air et qui est reliée à une pompe à air (6), la valve et la pompe étant à leur tour contrôlées par l'ordinateur (12).

3. Le système de la revendication 1, dans lequel chaque unité (1) est munie de deux moyens de propulsion (41, 42, 44) pour le déplacement latéral ou longitudinal de la palette (3) placée sur ces moyens, les moyens de propulsion (41, 42, 44) sont reliés à une source (6) d'air comprimé, les moyens de propulsion (41, 42, 44) étant aptes à être gonflés pour établir le contact avec la palette (3).
